# FASCICULE DE BREVET EUROPEEN

(11) **EP 0 495 860 B1**
(45) Date de publication et mention de la délivrance du brevet: **22.07.1998**
(21) Numéro de dépôt: 90915490.8
(22) Date de dépôt: 12.10.1990
(51) Int. Cl.: C02F 1/48

(54) **PROCEDE ET DISPOSITIF DE TRAITEMENT MAGNETIQUE DE FLUIDE**
VERFAHREN UND VORRICHTUNG ZUR MAGNETISCHEN BEHANDLUNG EINER FLÜSSIGKEIT
METHOD AND DEVICE FOR THE MAGNETIC TREATMENT OF A FLUID

(30) Priorité: 13.10.1989 FR 8913386; 11.04.1990 FR 9004680
(43) Date de publication de la demande: 29.07.1992
(73) Titulaire: MERCIER, Dominique, F-92360 Meudon-la-Foret (FR)
(72) Inventeur: MERCIER, Dominique, F-92360 Meudon-la-Foret (FR)
(74) Mandataire: Bruder, Michel
(86) Numéro de dépôt international: FR9000733
(87) Numéro de publication internationale: WO9105739

(56) Documents cités:
- DE-A- 3 618 174
- GB-A- 2 206 064

## Description

La présente invention a pour objet un dispositif de traitement magnétique d'un liquide.

Il est connu dans l'art antérieur que des produits très divers sont modifiés par certains champs magnétiques, qu'il s'agisse de produits chargés électriquement, comme des solutions ionisées, ou des produits relativement neutres électriquement, comme des micro-organismes en milieu fluide organique ou non.

Parmi les innombrables variétés d'actions exercées, il est bien connu que les champs magnétiques agissent sur les particules non électriquement neutres et en conséquence sur les courants électriques.

Il est également connu que de tels champs agissent sur les milieux fluides au sens qui a été défini ci-dessus. Généralement, on utilise des champs magnétiques ou électriques, voire électrostatiques, pour modifier ou induire des charges et créer des déviations, des séparations, des décantations, des modifications et autres phénomènes physiques, mécaniques ou même biologiques.

En ce qui concerne plus particulièrement certains corps neutres, tels que des micro-organismes ou certaines molécules, pour la plupart d'origine biologique, les champs électromagnétiques peuvent les modifier, ce qui est à la base de très nombreuses techniques, comme les cristaux liquides, ou de techniques relevant de la biotechnologie et permettant, par exemple, de rendre inactifs certains micro-organismes. Il est également connu dans l'art antérieur que les champs magnétiques peuvent exercer une action sur des solutions, en particulier en mobilisant les ions qu'elles contiennent; ce principe a déjà été utilisé dans des dispositifs de protection de réseaux de distribution d'eau sanitaire sous pression.

La présente invention a pour but d'étendre le domaine d'application de ces principes de traitement magnétique de liquides afin d'éliminer leurs propriétés gênantes, par exemple en tendant à annuler les effets nocifs des composés qu'ils peuvent véhiculer à l'état de solution, de suspension ou autre, ainsi que des micro-organismes qu'ils peuvent transporter. Cela peut concerner notamment les phénomènes d'entartrage par les sels minéraux en solution dans les eaux, qui tendent à se déposer et même à s'incruster, ainsi que la propagation par les micro-organismes dans les installations de distribution d'eau qui peuvent propager certains désordres en particulier chez l'homme ou chez les autres êtres vivants qui peuvent se trouver en contact avec ces eaux.

Mais l'expérience a montré au déposant de la présente demande qu'il ne suffisait pas, par exemple, de créer un champ magnétique tendant à écarter les ions de la paroi d'un tube ou d'un récipient pour éviter un entartrage, surtout si celui-ci est au moins en partie préexistant. Il faut des conditions qui sont à la base de la présente invention.

L'expérience a ainsi démontré que, lorsqu'on utilise un système magnétique de protection d'un réseau de distribution d'eau, les caractéristiques antitartre de l'eau tendent à disparaître dès qu'elles quittent la partie protégée du réseau, c'est-à-dire lorsqu'elles arrivent à l'atmosphère. On constate alors la formation de précipitations bien connues de certains colloïdes et de certains sels, qui entraînent des concrétions et des entartrages qu'augmentent encore la température ou l'utilisation de certains composés lessiviels. Ces phénomènes sont d'autant plus gênants que dans les utilisations domestiques de l'eau, ce sont généralement les appareils du type lave-linge, lave-vaisselle, bouilloire, réservoir de chasse-d'eau, équipement de cuisine, de toilette, de salle d'eau, de salle de bains, dans lesquels se traduisent de la façon la plus flagrante et la plus gênante ces désordres. En particulier dans les lave-vaisselle et dans les lave-linge, on arrive à des situations telles que non seulement le lavage laisse à désirer mais encore, très souvent, et en particulier sur la vaisselle où cela paraît de façon extrêmement claire, se produisent des dépôts d'où l'utilisation de produits antitartre, anticalcaire, antidépôt ou de produits augmentant la solvatation ou le pouvoir solvant dont les résultats sont généralement loin d'être probants.

L'expérience du déposant a démontré que des variations importantes du champ magnétique agissaient de façon particulièrement favorables, aussi bien sur des particules ionisées que sur certains constituants neutres et en particulier sur certains micro-organismes. Or, ces variations de champ magnétique peuvent être aussi bien des variations dans l'intensité du champ que, bien entendu, dans son orientation ou son signe, et également, dans une succession de modifications de l'intensité du champ. La fréquence de ces modifications joue alors un rôle non négligeable : lors du déplacement d'un élément chargé ou non, le passage d'une zone à champ magnétique relativement faible, comme par exemple le champ magnétique terrestre, à une zone où règne un champ magnétique important, comme par exemple celui créé par un aimant permanent ou par un électroaimant, peut entraîner un certain nombre de phénomènes en dehors de celui bien connu résultant de la loi d'Ampère. L'expérience a démontré que l'on constatait l'éclatement de certains agglomérats, la mobilisation de constituants ayant tendance à précipiter ou à décanter, l'inhibition de processus de développement et d'action biologique bactérienne, microbienne, virale ou autre, ces modifications étant telles que, contrairement à ce qui se passait selon les techniques antérieures, on peut parvenir à une certaine durabilité des propriétés dans le temps. C'est en particulier le cas lorsque des bactéries se trouvent inhibées. Si l'on conçoit qu'un changement brusque dans l'intensité d'un champ magnétique puisse provoquer de telles réactions, il est évident qu'une série de changements successifs de même polarité ou de polarités inversées, de changements d'intensité du champ alterné entre deux valeurs données ou entre des valeurs très variables, permettent d'obtenir de meilleurs résultats. Or, des expérimentations ont démontré que, selon le cas, en ondes électromagnétiques, on obtenait des actions importantes aussi bien avec des basses fréquences qu'avec des fréquences très élevées comme des ondes centimétriques par exemple ce qui est bien entendu, dans l'état actuel des choses, inapplicable simultanément. Dans ce qui suit, et pour ne pas créer de confusion lorsque l'on parle d'une "longueur d'onde" il s'agit de sa définition au sens classique du terme c'est-à-dire qu'une longueur d'onde est considérée comme la distance entre deux points consécutifs de même phase d'une ondulation rectiligne fixe (ou stationnaire) ou mobile. Cela sous-entend un certain déplacement relatif entre la référence et l'onde. C'est ainsi que, comme on le verra par la suite et selon la présente invention, on peut parvenir à concilier basse fréquence et haute fréquence électromagnétiques en jouant sur les mouvements relatifs des fluides à traiter par rapport aux dispositifs créateurs de champs magnétiques.

Le dispositif suivant l'invention permet de créer des modifications importantes et répétitives, selon des critères constants ou variables, pouvant agir sur des particules neutres ou chargées. Dans ce qui suit et pour fixer les idées, on considérera que les champs magnétiques sont fixes dans l'espace et que les particules sont mobiles.

Par ailleurs on a pu constater que certains micro-organismes éclataient dans certains champs magnétiques, ce qui est, bien entendu, la façon la plus efficace de les inhiber. L'expérience a montré que les dispositifs conformes à l'invention se révélaient particulièrement efficaces à l'encontre du plancton ce qui est d'un grand intérêt, tant du point de vue de l'environnement que dans tous les cas où l'on utilise des bassins, fontaines, piscines, et notamment dans les grandes installations de traitement des eaux, et en particulier de l'eau de mer.

Suivant l'invention on place donc des éléments magnétiques en présence d'un liquide chargé de particules en mouvement, liquides et particules étant ici pris dans les sens qui ont été définis précédemment.

Les éléments magnétiques peuvent être eux-mêmes constitués par des aimants, susceptibles de créer un champ magnétique suffisamment important pour apporter une perturbation dans un liquide chargé de particules. Ils peuvent également être constitués par des dispositifs autres, et en particulier par des dispositifs électromagnétiques ou par tous autres moyens adéquats ne faisant pas nécessairement appel à des matériaux magnétiques, mais par exemple à de simples bobinages parcourus par un courant électrique. De l'intensité du champ magnétique créé va dépendre en grande partie l'importance des effets produits, et cela relève du domaine de l'homme du métier qui modulera l'intensité ou les intensités du ou des champs magnétiques en fonction des effets qu'il désire produire. Les éléments magnétiques peuvent également être sous forme de microaimants et en particulier de poudre magnétique fixée dans un support, par exemple dans un support plastique ou caoutchouté qui peut être amagnétique et qui en facilite la mise en place. On fera suivant l'invention porter ces éléments magnétiques par les parois de l'installation dans laquelle vient circuler le fluide. Si une ligne de force d'un champ magnétique est perpendiculaire à la direction de déplacement de particules, l'effet obtenu sera maximal. Plus l'angle d'inclinaison entre la direction de déplacement d'une particule et la ligne de force est faible, plus l'effet obtenu sera lui-même faible. On a donc intérêt à faire circuler l'ensemble du débit fluide le plus perpendiculairement possible par rapport aux lignes de force, dans le cas où l'on désire aller dans le sens du non-entartrage et de la solubilité la plus favorable.

Si on veut utiliser des bandes de supports successifs et parallèles contenant des petits aimants, on répartira préférentiellement à l'intérieur de chaque bande, les petits aimants tournés dans le même sens, c'est-à-dire avec tous les pôles Sud d'un côté et tous les pôles Nord de l'autre, et on alternera les polarités d'une bande à la bande parallèle suivante.

Si de tels éléments magnétiques, ou de tels supports d'éléments magnétiques, et les particules liquides se trouvent en mouvement relatif, ces particules sont soumises en quelque sorte à un champ magnétique périodique dont la "longueur d'onde" est liée directement à la distance physique entre bandes d'éléments magnétiques à polarités orientées de la même manière. Si l'on considère cette disposition sans tenir compte de la vitesse du fluide, la "longueur d'onde" correspond au "pas" entre deux bandes supports, c'est-à-dire à l'espacement entre leurs axes médians. Le temps interviendra et la fréquence de rencontre des champs magnétiques successifs augmentera proportionnellement à la vitesse, de sorte qu'il sera possible de faire varier la fréquence et par conséquent la "longueur d'onde" relative en fonction de la vitesse du fluide dans les champs magnétiques. On peut ainsi, par exemple, disposer d'un champ magnétique produit par des supports sur la base d'une "longueur d'onde" de l'ordre de 1 millimètre à 1 mètre, c'est-à-dire des ondes s'étendant de l'onde millimétrique à l'onde métrique, longueurs d'onde qui vont varier, en fonction de la vitesse relative, quant à l'effet des champs magnétiques sur les particules véhiculées par le fluide.

L'expérience a montré que, dans l'utilisation des dispositifs conformes à l'invention, le déplacement relatif tend à augmenter d'autant plus les effets de solvatation que l'on se rapproche de l'orthogonalité dans ce déplacement, et les effets de précipitation quand on se rapproche du parallélisme. Il est donc à noter que si, dans le cas le plus fréquent, on cherche à éviter les précipitations, on se rapprochera autant que faire se peut de l'orthogonalité, en gardant en mémoire le fait que si, dans certains cas ou dans certaines zones , on veut se débarrasser de composants, par exemple par précipitation, il suffira d'organiser dispositions et mouvements relatifs pour se rapprocher du parallélisme. Ainsi, dans le cas d'un mouvement relatif oblique, selon l'importance relative de la composante de vitesse orthogonale et la composante de vitesse parallèle , on peut jouer sur l'un et l'autre plan et solvater dans le sens de circulation tout en précipitant dans un sens transversal.

La présente invention a ainsi pour objet un dispositif de traitement magnétique d'un liquide dans une enceinte de travail, dans lequel le liquide est en mouvement par rapport à des champs magnétiques successifs, caractérisé en ce que les champs magnétiques sont créés par des bandes aimantées successives sensiblement parallèles disposées autour d'au moins une partie du volume de l'enceinte, de façon à permettre une action "in situ" de ces champs magnétiques sur le fluide contenu dans ladite enceinte.

Dans ce dispositif, les bandes aimantées font partie d'éléments souples, notamment plastiques ou caoutchoutés tels que des feuilles , pellicules ou nappes.

De préférence, les bandes aimantées s'étendent transversalement par rapport aux éléments souples.

On peut ainsi faire circuler une solution ionique ou encore un fluide chargé en micro-organismes pour les soumettre à l'action des champs magnétiques.

On peut également faire varier la vitesse de circulation du fluide par rapport à la surface présentant les éléments magnétiques successifs pour faire varier corrélativement la fréquence d'action des champs magnétiques.

Selon un mode de réalisation préféré de l'invention, on provoque un mouvement du fluide par rapport à au moins une surface présentant des éléments magnétiques successifs produisant des champs magnétiques successifs de manière que chaque particule constituant le fluide ou véhiculée par lui soit soumise successivement à l'action des champs magnétiques successifs produits par les éléments magnétiques successifs.

Le fluide peut être contenu dans une enveloppe de bonne conductibilité électrique, par exemple métallique, notamment en acier inoxydable, avec laquelle les éléments magnétiques successifs sont en contact.

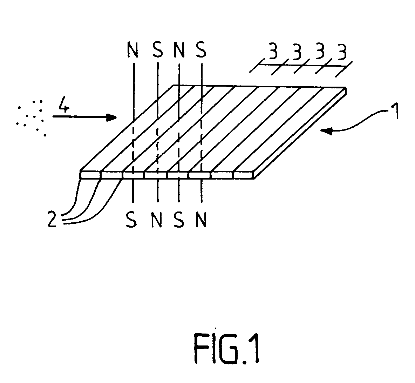

On décrira ci-après, à titre d'exemple non limitatif, une forme d'exécution de la présente invention, en référence au dessin annexé sur lequel :

La figure unique est une vue en perspective d'un dispositif plan conforme à l'invention illustrant le principe de celle-ci,

### Exemple :

Ainsi qu'il est représenté sur la figure une feuille, pellicule ou nappe 1, de préférence en polymère isolant et magnétique, présente des bandes transversales adjacentes 2, de même largeur 3, à polarités magnétiques alternées. Ces bandes 2 sont chargées de petits aimants orientés alternativement NS/SN, perpendiculairement au plan de la feuille 1. Autrement dit les bandes successives 2 présentent des faces polaires supérieures ayant alternativement des polarités N,S,N,S... et des faces polaires inférieures ayant alternativement des polarités S,N,S,N... Si des particules 4 circulent dans un fluide le long de la surface de la feuille 1, de préférence orthogonalement aux bandes 2, elles rencontrent alternativement des champs magnétiques à polarité variant périodiquement dont la "demi-longueur d'onde" est égale à la largeur 3 entre les bandes 2, c'est-à-dire à l'intervalle entre les axes médians de bandes successives 2 de polarités opposées, la "longueur d'onde" étant égale au double de cet intervalle c'est-à-dire à la distance entre les axes médians de deux bandes 2 successives de même polarité.

On précisera que les résultats fournis par le présent procédé et les dispositifs de mise en oeuvre de celui-ci, sont grandement amplifiés lorsque l'enceinte de travail contenant le liquide est constitué d' une enveloppe de bonne conductibilité électrique avec laquelle les éléments magnétiques successifs sont en contact. Dans une variante intéressante de l'invention on pourrait ainsi utiliser une enveloppe en acier inoxydable.

On a ainsi pu utiliser expérimentalement de tels dispositifs dans tous les cas où l'entartrage est une gêne (machines à laver, machines à café par exemple) ou dans ceux où il est nécessaire de diminuer les effets pathogènes des eaux traitées par destruction des micro-organismes.

## Revendications

1. Dispositif de traitement magnétique d'un liquide dans une enceinte de travail, dans lequel le liquide est en mouvement par rapport à des champs magnétiques successifs, caractérisé en ce que les champs magnétiques sont créés par des bandes aimantées (2) successives sensiblement parallèles disposées autour d'au moins une partie du volume de l'enceinte, de façon à permettre une action "in situ" de ces champs magnétiques sur le fluide contenu dans ladite enceinte.

2. Dispositif suivant la revendication 1 caractérisé en ce que les bandes aimantées (2) font partie d'éléments souples, notamment plastiques ou caoutchoutés tels que des feuilles, pellicules ou nappes (1).

3. Dispositif suivant la revendication 2 caractérisé en ce que les bandes aimantées (2) s'étendent transversalement par rapport aux éléments souples (1).

## Claims

1. Device for magnetically treating a liquid in a work enclosure, in which the liquid is in movement with respect to successive magnetic fields, characterized in that the magnetic fields are created by successive, substantially parallel, magnetized bands (2) disposed around at least a part of the volume of the enclosure, so as to allow an action "in situ" of these magnetic fields on the fluid contained in said enclosure.

2. Device according to Claim 1, characterized in that the magnetized bands (2) form part of supple elements, particularly plastic or rubberized ones, such as foils, films or sheets (1).

3. Device according to Claim 2, characterized in that the magnetized bands (2) extend transversely with respect to the supple elements (1).

## Patentansprüche

1. Vorrichtung zur magnetischen Behandlung einer Flüssigkeit in einem Arbeitsgefäß, in welchem die Flüssigkeit gegenüber aufeinanderfolgenden Magnetfeldern in Bewegung ist,
dadurch gekennzeichnet, daß die Magnetfelder durch aufeinanderfolgende, im wesentlichen parallele magnetisierte Streifen erzeugt werden, die um mindestens einen Teil des Volumens der Kammer im Sinne einer "in situ"-Wirkung der Magnetfelder auf die in der Kammer befindliche Flüssigkeit angeordnet sind.

2. Vorrichtung nach Anspruch 1,
dadurch gekennzeichnet, daß die magnetisierten Streifen (2) flexiblen Elementen, wie Folien, Häutchen oder Schichten, insbesondere aus Plastik oder Gummi, zugeordnet sind.

3. Vorrichtung nach Anspruch 2,
dadurch gekennzeichnet, daß die magnetisierten Streifen (2) quer zu den flexiblen Elementen verlaufen.
